# EUROPEAN PATENT SPECIFICATION

(11) **EP 3 415 363 B1**
(45) Date of publication and mention of the grant of the patent: **26.08.2020**
(21) Application number: 18177696.4
(22) Date of filing: 14.06.2018
(51) Int. Cl.: B60P 1/43, B60P 3/06, B65G 69/30

(54) **A VEHICLE COMPRISING A PLATFORM FOR LOADING/UNLOADING**
FAHRZEUG MIT EINER PLATTFORM ZUM BELADEN/ENTLADEN
VÉHICULE COMPRENANT UNE PLATEFORME DE CHARGEMENT/DÉCHARGEMENT

(30) Priority: 16.06.2017 NL 2019083
(43) Date of publication of application: 19.12.2018
(73) Proprietor: Coxx Group B.V., 5121 DK Rijen (NL)
(72) Inventor: COX, René Gerard Marie, 2242 Zandhoven (BE)
(74) Representative: Altenburg, Bernardus Stephanus Franciscus

(56) References cited:
- EP-A1- 0 655 366
- DE-A1-102012 009 894
- DE-B- 1 243 588
- DE-U1- 29 605 672
- US-A- 5 608 937

## Description

The present invention relates to a vehicle comprising
- wheels, said wheels defining a base plane for contact with a road, the vehicle having a front and a rear defining
   - a longitudinal direction parallel to said base plane, and
   - a transversal direction transverse to the longitudinal direction and parallel to said base plane;
- a cargo space,
- a platform that
   - is rotatable about an axis parallel to the transversal direction between an upright first position and a second position substantially parallel to the base plane, and
   - in the second position is moveable transverse to the base plane;
said platform having a first side relatively close to the axis of rotation and a second side opposite of the first side.

A vehicle according to the preamble is generally known in the art. It is for example a trailer for a truck or more typically a truck or van. To move cargo into the cargo space or out of the cargo space, use is made of a platform that is moved from a relatively high level of the floor of the cargo space to a relatively low level that is close to the base plane. This allows for example trolleys containing goods to be transported easily because they are rolled onto the platform which is then moved transverse to the base plane to the desired level. When not in use, the platform is rotated to the upright first position, with the platform being substantially parallel to the rear side of the cargo space.

It is a problem that the platform provides a safety issue. People may walk or ride (bicycle) into the platform when it is moved to or from the upright position, and/or while during use it is at an elevated level. The latter problem is currently combatted by placing a colourful cone onto the platform. Another issue is that the foot of a person may be injured if it is trapped below the platform when the platform is lowered to the relatively low position.

The object of the present invention is to provide a vehicle in which at least one of the above problems is reduced.

To this end, a vehicle according to the preamble is characterized in that the second side of the platform is provided with a safety device, said safety device
- comprising flexible material, said flexible material
   - protruding from the second side of the platform away from the axis of rotation,
   - having a length between a proximal edge relatively close the axis of rotation of the platform and a distal edge relatively far from said axis of rotation of at least 5 cm;
   and
- extending over at least 50% of the width of the second side of the platform;
wherein the safety device is held by a bracket comprising two arms and an oblong element extending between the arms, wherein the safety device comprises a through-hole, the oblong element extends through the through-hole, and the through-hole is oversized with respect to the oblong element.

Thus instead of a hard edge of the platform, which is typically made of steel, the safety device - more specifically the distal end thereof - is a cushion device because it provides a less hard area of contact thanks to its length and flexible nature. Also, it is harder for toes to extend below the platform. Contact of toes with the safety device during lowering of the platform is no problem because of the flexible nature of the safety device.

In contrast to a cone, no attention is required to use this safety measure to increase the safety as the safety device will remain to the vehicle, i.e. also when the vehicle is on the move.

By use of the bracket comprising two arms and the oblong element, the safety device is conveniently mounted to the platform. Also, the forces exerted on the oblong element and thus on the bracket are reduced. This is in particular the case if the safety device extends below the platform in the second position thereof. Then, if the platform is forced against the road, the forces exerted by the platform on the safety device are absorbed by the flexible material.

The flexible material of the safety device generally has a length of less than 40 cm. The flexible material will typically be a resilient material. The flexible material of the safety device will typically be made of an elastomer, such as synthetic rubber.

The safety device will typically occupy at least 60% of the width of the second side, preferably at least 80%, and more preferably at least 90%.

DE1243588 discloses a loading platform comprising an elastically deformable access plate. The loading platform can be placed between a vehicle and a loading dock to allow access to the cargo space of the vehicle. Document De 1 243 588 B1 discloses the preamble of claim 1.

US5608937 discloses a portable ramp for providing a bridge between a ground level surface and a raised surface, having at a distal edge a resilient foot member which provides stability.

According to a favourable embodiment, said flexible material has a length of at least 10 cm.

Thus the risk that a foot becomes trapped between the platform and the street can be further reduced.

According to a favourable embodiment, the safety device is a coloured safety device.

The colour is advantageously a colour suitable for signal purposes, preferably a colour chosen from red, yellow and orange.

According to a favourable embodiment, the flexible material of the safety device tapers towards the distal end of the safety device.

Thus it is easier to roll a load onto the platform.

According to a favourable embodiment, the safety device comprises a waist in a section of the safety device between the axis of rotation and the distal end of the safety device, said section comprising the waist being located between i) the proximal end of the flexible material of the safety device and ii) a location at 50% of the length of the flexible material of the safety device from the proximal end of the flexible material.

The waist of a finger is preferably located in a half of the finger closest to the second edge of the platform. The waist makes the safety device more flexible yet it still allows the remainder of the flexible material to have sufficient strength to withstand the weight of a load rolled over the flexible material onto the platform.

The waist is preferably located between the i) the proximal end of the flexible material of the safety device (115) and ii) a location at 30% of the length of the flexible material of the safety device from the proximal end of the flexible material. Thus the section of the safety device adjacent to said section comprising the waist and comprising the distal end can more easily contact the road when a force is exerted onto the safety device, e.g. by a load.

According to a favourable embodiment, in the second position the proximal end of the safety device protrudes below the platform.

Thus the road or road markings are not damaged by the platform when it is in the relatively low position. Also, damage to the platform itself is reduced, as a result of which it will take longer before it has to be replaced, saving cost.

According to a favourable embodiment, the safety device is mounted hingably to the second side, capable of hinging
- over at least 5°, preferably at least 10°, and
- over at most 45°, preferably at most 35°.

The safety device will droop when the platform is in the second position or moving towards the second position rendering the safety device more visible, thus increasing safety, and capable of providing a larger impact surface thus reducing high local loads on the body of a person running into the platform of the vehicle.

The hinging is substantially parallel to the axis of rotation of the platform.

According to a favourable embodiment, the safety device comprises a row of fingers of the flexible material.

Thus a safety device can be easily produced to a desired width by selecting a number of fingers suitable for the second edge of the platform concerned. It also allows in a convenient manner to provide a safety device comprising a selection of different colours and/or shades (e.g. alternating yellow and black fingers).

According to a favourable embodiment, of the row of fingers, at least some of the fingers can hinge to a different extent than adjacent finger.

Thus the fingers will more easily contact the road and conform to its irregularities. The fingers conform to irregularities of the road, making it easier to roll are load onto the platform.

The fingers are preferably capable of hinging over
- over at least 5°, preferably at least 10°, and independently
- over at most 45°, preferably at most 35°.

According to a favourable embodiment, the fingers are spaced less than 5 cm apart, preferably less than 3 cm apart, more preferably less than 1,5 cm apart.

Thus it is harder for a person to get trapped below the platform or contact the second edge of. Also, if a person hits the row of fingers, he will hit more fingers, thus softening the impact for the person.

Finally, the present invention relates to a platform said platform having a first side and a second side opposite of the first side, wherein the second side of the platform is provided with a safety device, said safety device
- comprising flexible material, said flexible material
   - protruding away from the axis of rotation,
   - having a length between a proximal edge relatively close the axis of rotation of the platform and a distal edge relatively far from said axis of rotation of at least 5 cm;
   and
- extending over at least 50% of the width of the second side of the platform;
wherein the safety device is held by a bracket comprising two arms and an oblong element extending between the arms, wherein the safety device comprises a through-hole, the oblong element extends through the through-hole, and the through-hole is oversized with respect to the oblong element.

Thus the safety device is conveniently mounted to the platform. Also, the forces exerted on the oblong element and thus on the bracket are reduced. This is in particular the case if the safety device extends below the platform in the second position thereof. Then, if the platform is forced against the road, the forces exerted by the platform on the safety device are absorbed by the flexible material.

The invention also covers a platform comprising the safety device as defined for dependent claims for the vehicle in any combination, repetition of the subject matter being abstained from for reason of brevity only.

The present invention will now be illustrated with reference to the drawing where
Fig. 1A to Fig. 1C show a side view of a vehicle comprising a platform;
Fig. 2A and Fig. 2B show a partial perspective top view and bottom view of the platform of Fig. 1B;
Fig. 3A shows a sideview of a finger used in the safety device according to the invention; and
Fig. 3B shows a partial sideview of the platform of Fig. 1B, with fingers of Fig. 3A mounted to said platform.

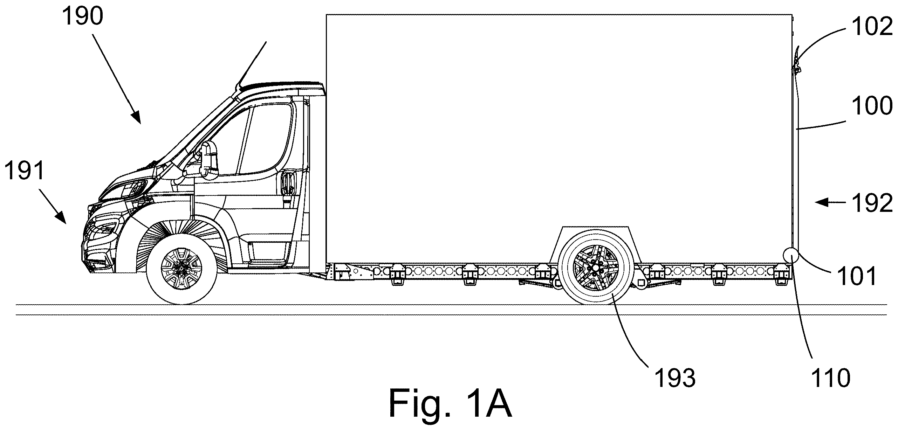

Fig. 1A to Fig. 1C show a side view of a vehicle 190 having a front 191 and a rear 192, and comprising wheels 193 defining a base plane where it contacts a road.

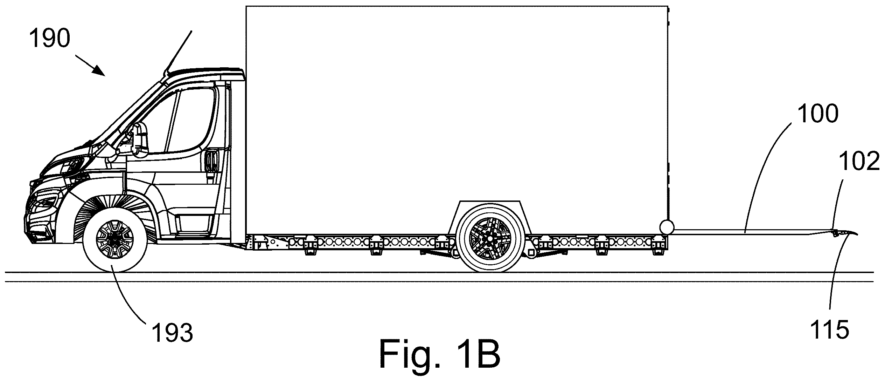

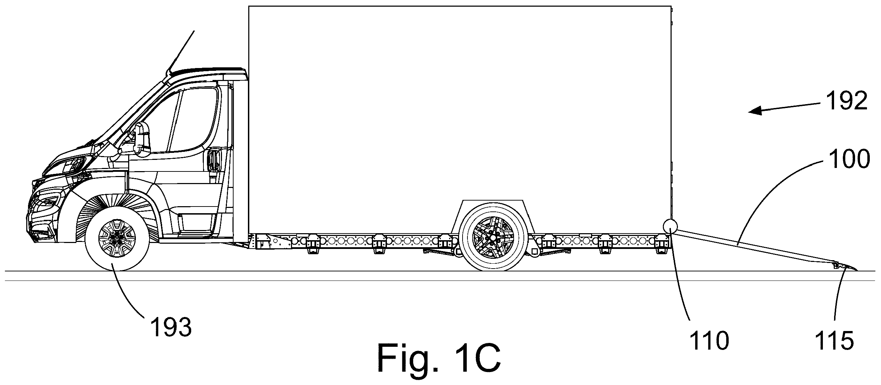

The vehicle further comprises platform 100, that is moveable and rotatable, in respectively an upright first position (Fig. 1A), a second position where it is substantially parallel to the base plane (Fig. 1B). The platform 100 is movable between a relatively high position (the second position of Fig. 1B) and a relatively low position (Fig. 1C).

The platform 100 is rotatable about axis 110, and comprises a first edge 101 relatively close to said axis 110 and a distal second edge 102.

The above is in accordance with the state of the art.

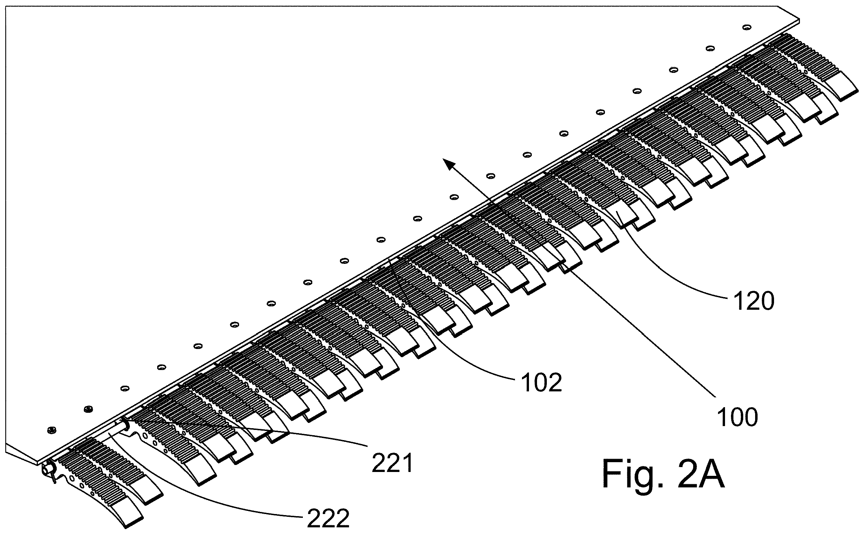

In accordance with the present invention, the second edge 102 is provided with a safety device 115 that works as a cushioning device, which safety device 115 in this case comprises a plurality of fingers 120 (Fig. 2A) made of resilient material.

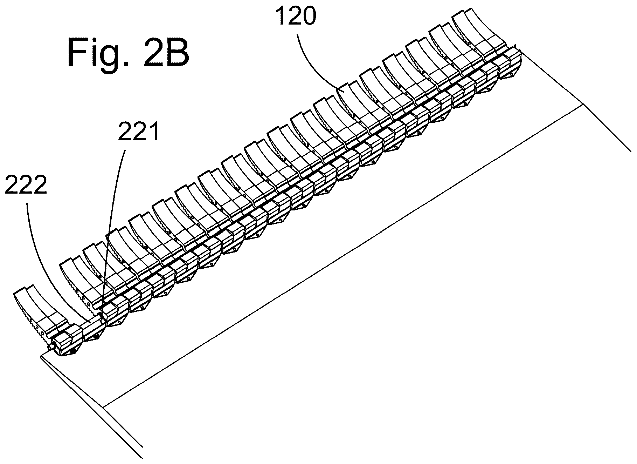

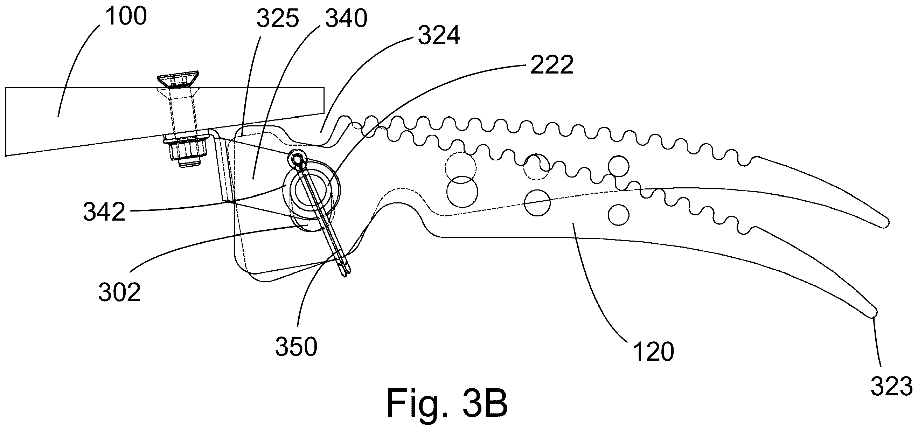

Fig. 2A and Fig. 2B show a partial perspective top view and bottom view of the platform of Fig. 1B, with the fingers 120 capable of hinging independent of other fingers. 120. One finger 120 has been omitted from the drawings to show brackets 221 and tube 222 used for mounting, as will be explained in more detail with reference to Fig. 3B.

As can be seen in Fig. 2A, the fingers 120 occupy most of the width of the platform 100, the width dimension extending in a direction transverse (see also Fig. 1) to the longitudinal direction of the vehicle.

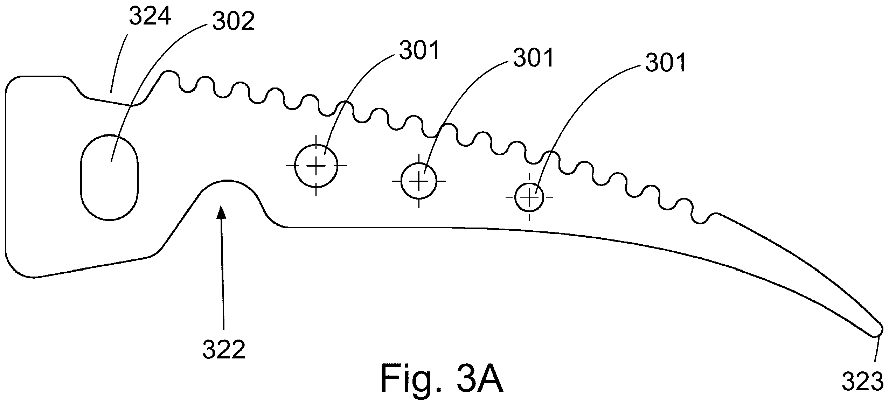

Fig. 3A shows a sideview of a finger 120 used in the safety device according to the invention. Holes 301 merely serve to save weight and reduce cost. Hole 302 is a through-hole used for mounting the fingers 120 with tube 222 (Fig. 2A). In the embodiment shown the through-hole 302 is oblong (with the direction of the a greatest diameter transverse to the bottom of the platform 100) allowing more freedom to hinge when mounted to the platform 100. In conjunction with recess 324 for receiving the second edge 102 of the platform 100 it allows the top surface of the fingers 120 to be more flush with the top surface of the platform 100.

The fingers 120 comprise a waist 322 allowing the fingers 120 to bend about the location of the waist 322 as wel as near the distal ends 323 of the fingers 120.

The fingers 120 comprise a taper towards the distal end 323, making it more convenient to push a load such as a trolley onto the platform 100.

The finger 120 shown in Fig. 3A has an arcuate shape, allowing it to be more flexible upon impact from the distal end 323 of the finger 120.

Fig. 3B shows a partial sideview of the platform of Fig. 1B, with two fingers 120 of Fig. 3A mounted to said platform 100 using a bracket 340. The two fingers 120 are displayed at different angles with respect to the platform 100 to demonstrate how they can hinge around the tube 222. The bracket 340 is bolted at the bottom side of the platform 100 and comprises a through-hole 342 for the tube 222.

The tube 222 is held in place using locking pins 350 at each end of the tube 222.

A proximal section located between the proximal end of the finger 120 and the through-hole 302 comprises a side section serving as a stop 325, limiting the angle over which the finger can rotate when hinging.

Phrased differently, the invention relates to vehicle comprising
- a cargo space, and
- a platform that
- is rotatable about a horizontal axis between an upright first position and a substantially horizontal second position, and
- in the second position is vertically moveable;
said platform having a first side relatively close to the axis of rotation and a second side opposite of the first side.

To reduce the risk of a person being injured, e.g. by running into the second edge of the platform, the second side of the platform is provided with a safety device comprising flexible material protruding from the second side of the platform.

## Claims

1. A vehicle (190) comprising
- wheels (193), said wheels (193) defining a base plane for contact with a road, the vehicle (190) having a front (191) and a rear (192) defining
- a longitudinal direction parallel to said base plane, and
- a transversal direction transverse to the longitudinal direction and parallel to said base plane;
- a cargo space,
- a platform (100) that
- is rotatable about an axis (110) parallel to the transversal direction between an upright first position and a second position substantially parallel to the base plane, and
- in the second position is moveable transverse to the base plane;
said platform (100) having a first side (101) relatively close to the axis (110) of rotation and a second side (102) opposite of the first side (101); wherein the second side (102) of the platform (100) is provided with a safety device (115), said safety device (115)
- comprising flexible material, said flexible material
- protruding from the second side (102) of the platform (100) away from the axis (110) of rotation,
- having a length between a proximal edge relatively close the axis (110) of rotation of the platform (100) and a distal edge relatively far from said axis (110) of rotation of at least 5 cm;
and
- extending over at least 50% of the width of the second side (102) of the platform (100); **characterised in that** the safety device (115) is held by a bracket comprising two arms and an oblong element (222) extending between the arms, wherein the safety device (115) comprises a through-hole (302), the oblong element (222) extends through the through-hole (302), and the through-hole (302) is oversized with respect to the oblong element (222).

2. The vehicle (190) according to claim 1, wherein said flexible material has a length of at least 10 cm.

3. The vehicle (190) according to claim 1 or 2, wherein the safety device (115) is a coloured safety device (115).

4. The vehicle (190) according to any of the preceding claims, wherein the flexible material of the safety device (115) tapers towards the distal end (323) of the safety device (115).

5. The vehicle (190) according to any of the preceding claims, wherein the safety device (115) comprises a waist (322) in a section of the safety device (115) between the axis of rotation and the distal end of the safety device (115), said section comprising the waist (322) being located between i) the proximal end of the flexible material of the safety device (115) and ii) a location at 50% of the length of the flexible material of the safety device (115) from the proximal end of the flexible material.

6. The vehicle (190) according to any of the preceding claims, wherein in the second position the proximal end (323) of the safety device (115) protrudes below the platform (100).

7. The vehicle (190) according to any of the preceding claims, wherein the safety device (115) is mounted hingably to the second side (102), capable of hinging
- over at least 5°, preferably at least 10°, and
- over at most 45°, preferably at most 35°.

8. The vehicle (190) according to any of the preceding claims, wherein the safety device (115) comprises a row of fingers (120) of the flexible material.

9. The vehicle (190) according to claim 8, wherein of the row of fingers (120), at least some of the fingers (120) can hinge to a different extent than adjacent finger (120).

10. The vehicle (190) according to any of the claims 8 or 9, wherein the fingers (120) are spaced less than 5 cm apart, preferably less than 3 cm apart, more preferably less than 1,5 cm apart.

11. A platform (100) having a first side (101) and a second side (102) opposite of the first side (101), wherein the second side (102) of the platform (100) is provided with a safety device (115), said safety device (115)
- comprising flexible material, said flexible material
- protruding away from the axis (110) of rotation,
- having a length between a proximal edge relatively close the axis (110) of rotation of the platform (100) and a distal edge relatively far from said axis (110) of rotation of at least 5 cm;
and
- extending over at least 50% of the width of the second side (102) of the platform (100); **characterised in that** the safety device (115) is held by a bracket comprising two arms and an oblong element (222) extending between the arms, wherein the safety device (115) comprises a through-hole (302), the oblong element (222) extends through the through-hole (302), and the through-hole (302) is oversized with respect to the oblong element (222).

## Patentansprüche

1. Fahrzeug (190), umfassend
- Räder (193), wobei die Räder (193) eine Grundebene zum Kontakt mit einer Straße definieren, wobei das Fahrzeug (190) eine Front (191) und ein Heck (192) aufweist, die
- eine Längsrichtung parallel zur Grundebene und
- eine Querrichtung quer zur Längsrichtung und parallel zur Grundebene
definieren;
- einen Laderaum,
- eine Plattform (100), die
- um eine Achse (110) parallel zur Querrichtung zwischen einer aufrechten ersten Position und einer zweiten Position im Wesentlichen parallel zur Grundebene drehbar ist und
- in der zweiten Position quer zur Basisebene bewegbar ist;
wobei die Plattform (100) eine erste Seite (101) relativ nahe zur Drehachse (110) und eine der ersten Seite (101) gegenüberliegende zweite Seite (102) aufweist;
wobei die zweite Seite (102) der Plattform (100) mit einer Sicherheitseinrichtung (115) bereitgestellt ist, wobei die Sicherheitseinrichtung (115)
- flexibles Material umfasst, wobei das flexible Material
- von der zweiten Seite (102) der Plattform (100) von der Drehachse (110) weg hervorsteht,
- eine Länge zwischen einer proximalen Kante relativ nahe zur Drehachse (110) der Plattform (100) und einer distalen Kante relativ weit von der Drehachse (110) von mindestens 5 cm aufweist; und
- sich über mindestens 50 % der Breite der zweiten Seite (102) der Plattform (100) erstreckt;
**dadurch gekennzeichnet, dass**
die Sicherheitseinrichtung (115) durch eine Halterung gehalten ist, die zwei Arme und ein längliches Element (222), das sich zwischen den Armen erstreckt, umfasst, wobei die Sicherheitseinrichtung (115) ein Durchgangsloch (302) umfasst, das längliche Element (222) sich durch das Durchgangsloch (302) hindurch erstreckt und das Durchgangsloch (302) in Bezug auf das längliche Element (222) überdimensioniert ist.

2. Fahrzeug (190) nach Anspruch 1, wobei das flexible Material eine Länge von mindestens 10 cm aufweist.

3. Fahrzeug (190) nach Anspruch 1 oder 2, wobei die Sicherheitseinrichtung (115) eine farbige Sicherheitseinrichtung (115) ist.

4. Fahrzeug (190) nach einem der vorstehenden Ansprüche, wobei sich das flexible Material der Sicherheitseinrichtung (115) zum distalen Ende (323) der Sicherheitseinrichtung (115) hin verjüngt.

5. Fahrzeug (190) nach einem der vorstehenden Ansprüche, wobei die Sicherheitseinrichtung (115) eine Taille (322) in einem Abschnitt der Sicherheitseinrichtung (115) zwischen der Drehachse und dem distalen Ende der Sicherheitseinrichtung (115) umfasst, wobei der Abschnitt, der die Taille (322) umfasst, zwischen i) dem proximalen Ende des flexiblen Materials der Sicherheitseinrichtung (115) und ii) einem Ort bei 50 % der Länge des flexiblen Materials der Sicherheitseinrichtung (115) vom proximalen Ende des flexiblen Materials verortet ist.

6. Fahrzeug (190) nach einem der vorstehenden Ansprüche, wobei in der zweiten Position das proximale Ende (323) der Sicherheitseinrichtung (115) unter die Plattform (100) hervorsteht.

7. Fahrzeug (190) nach einem der vorstehenden Ansprüche, wobei die Sicherheitseinrichtung (115) schwenkbar an der zweiten Seite (102) montiert ist, in der Lage,
- über mindestens 5°, vorzugsweise mindestens 10°, und
- über höchstens 45°, vorzugsweise höchstens 35°,
zu schwenken.

8. Fahrzeug (190) nach einem der vorstehenden Ansprüche, wobei die Sicherheitseinrichtung (115) eine Reihe von Fingern (120) aus dem flexiblen Material umfasst.

9. Fahrzeug (190) nach Anspruch 8, wobei von der Reihe von Fingern (120) mindestens einige der Finger (120) in einem anderen Ausmaß als der benachbarte Finger (120) schwenkbar sind.

10. Fahrzeug (190) nach einem der Ansprüche 8 oder 9, wobei die Finger (120) weniger als 5 cm voneinander beabstandet sind, vorzugsweise weniger als 3 cm voneinander, nochmals vorzugsweise weniger als 1,5 cm voneinander.

11. Plattform (100), die eine erste Seite (101) und eine der ersten Seite (101) gegenüberliegende zweite Seite (102) aufweist, wobei die zweite Seite (102) der Plattform (100) mit einer Sicherheitseinrichtung (115) bereitgestellt ist, wobei die Sicherheitseinrichtung (115)
- flexibles Material umfasst, wobei das flexible Material
- von der Drehachse (110) weg hervorsteht,
- eine Länge zwischen einer proximalen Kante relativ nahe zur Drehachse (110) der Plattform (100) und einer distalen Kante relativ weit von der Drehachse (110) von mindestens 5 cm aufweist; und
- sich über mindestens 50 % der Breite der zweiten Seite (102) der Plattform (100) erstreckt;
**dadurch gekennzeichnet, dass**
die Sicherheitseinrichtung (115) durch eine Halterung gehalten ist, die zwei Arme und ein längliches Element (222), das sich zwischen den Armen erstreckt, umfasst, wobei die Sicherheitseinrichtung (115) ein Durchgangsloch (302) umfasst, das längliche Element (222) sich durch das Durchgangsloch (302) hindurch erstreckt und das Durchgangsloch (302) in Bezug auf das längliche Element (222) überdimensioniert ist.

## Revendications

1. Véhicule (190) qui comprend:
- des roues (193), lesdites roues (193) définissant un plan de base pour la mise en contact avec une route, le véhicule (190) possédant un avant (191) et un arrière (192) qui définissent :
- une direction longitudinale qui est parallèle audit plan de base ; et
- une direction transversale qui est transversale par rapport à la direction longitudinale et qui est parallèle audit plan de base ;
- un espace de chargement ;
- une plate-forme (100) qui
- est rotative autour d'un axe (110) qui est parallèle à la direction transversale entre une première position redressée et une deuxième position essentiellement parallèle au plan de base ; et
- dans la deuxième position, est mobile dans la direction transversale par rapport au plan de base ;
ladite plate-forme (100) possédant un premier côté (101) relativement proche de l'axe (110) de rotation et un deuxième côté (102) opposé au premier côté (101) ;
dans lequel le deuxième côté (102) de la plate-forme (100) est équipé d'un dispositif de sécurité (115), ledit dispositif de sécurité (115)
- comprenant un matériau flexible, ledit matériau flexible
- faisant saillie par rapport au deuxième côté (102) de la plate-forme (100) à l'écart de l'axe (110) de rotation ;
- possédant une longueur qui se situe entre un bord proximal relativement proche de l'axe (110) de rotation de la plate-forme (100) et un bord distal relativement éloigné dudit axe (110) de rotation sur au moins 5 cm ;
et
- s'étendant sur au moins 50 % de la largeur du deuxième côté (102) de la plate-forme (100) ;
**caractérisé en ce que** le dispositif de sécurité (115) est maintenu par un support comprenant deux bras et un élément de forme oblongue (222) qui s'étend entre les bras ; dans lequel le dispositif de sécurité (115) comprend un trou de passage (302), l'élément de forme oblongue (222) s'étend à travers le trou de passage (302) et le trou de passage (302) est surdimensionné par rapport à l'élément de forme oblongue (222).

2. Véhicule (190) selon la revendication 1, dans lequel ledit matériau flexible possède une longueur d'au moins 10 cm.

3. Véhicule (190) selon la revendication 1 ou 2, dans lequel le dispositif de sécurité (115) représente un dispositif de sécurité en couleur (115).

4. Véhicule (190) selon l'une quelconque des revendications précédentes, dans lequel le matériau flexible du dispositif de sécurité (115) se rétrécit dans la direction de l'extrémité distale (323) du dispositif de sécurité.

5. Véhicule (190) selon l'une quelconque des revendications précédentes, dans lequel le dispositif de sécurité (115) comprend un rétrécissement (322) dans un tronçon du dispositif de sécurité (115) situé entre l'axe de rotation et l'extrémité distale du dispositif de sécurité (115), ledit tronçon qui comprend le rétrécissement (322) étant situé entre i) l'extrémité proximale du matériau flexible du dispositif de sécurité (115) et ii) un endroit situé à 50 % de la longueur du matériau flexible du dispositif de sécurité (115) à partir de l'extrémité proximale du matériau flexible.

6. Véhicule (190) selon l'une quelconque des revendications précédentes, dans lequel, dans la deuxième position, l'extrémité proximale (323) du dispositif de sécurité (115) fait saillie en dessous de la plate-forme (100).

7. Véhicule (190) selon l'une quelconque des revendications précédentes, dans lequel le dispositif de sécurité (115) est monté en articulation sur le deuxième côté (102) en étant capable de s'articuler
- sur au minimum 5°, de préférence au minimum 10° ; et
- sur au maximum 45°, de préférence au maximum 35°.

8. Véhicule (190) selon l'une quelconque des revendications précédentes, dans lequel le dispositif de sécurité (115) comprend une rangée de doigts (120) qui sont constitués du matériau flexible.

9. Véhicule (190) selon l'une quelconque des revendications précédentes, dans lequel, parmi la rangée de doigts (120), au moins un certain nombre des doigts (120) sont capables de s'articuler sur une étendue différente de celle d'un doigt adjacent (120).

10. Véhicule (190) selon l'une quelconque des revendications 8 ou 9, dans lequel les doigts (120) sont espacés les uns des autres sur une distance inférieure à 5 cm, de préférence sont espacés les uns des autres sur une distance inférieure à 3 cm, de manière plus préférée sont espacés les uns des autres sur une distance inférieure à 1,5 cm.

11. Plate-forme (100) qui possède un premier côté (101) et un deuxième côté (102) opposé au premier côté, dans lequel le deuxième côté (102) de la plate-forme (100) est équipé d'un dispositif de sécurité (115), ledit dispositif de sécurité (115)
- comprenant un matériau flexible, ledit matériau flexible
- faisant saillie à l'écart de l'axe (110) de rotation ;
- possédant une longueur qui se situe entre un bord proximal relativement proche de l'axe (110) de rotation de la plate-forme (100) et un bord distal relativement éloigné dudit axe (110) de rotation sur au moins 5 cm ;
et
- s'étendant sur au moins 50 % de la largeur du deuxième côté (102) de la plate-forme (100) ;
**caractérisé en ce que** le dispositif de sécurité (115) est maintenu par un support comprenant deux bras et un élément de forme oblongue (222) qui s'étend entre les bras ; dans lequel le dispositif de sécurité (115) comprend un trou de passage (302), l'élément de forme oblongue (222) s'étend à travers le trou de passage (302) et le trou de passage (302) est surdimensionné par rapport à l'élément de forme oblongue (222).
